(19) Europäisches Patentamt / European Patent Office / Office européen des brevets

(11) EP 3 788 552 B1

(12) **EUROPÄISCHE PATENTSCHRIFT**

(45) Veröffentlichungstag und Bekanntmachung des Hinweises auf die Patenterteilung:
**17.07.2024 Patentblatt 2024/29**

(21) Anmeldenummer: **19717825.4**

(22) Anmeldetag: **10.04.2019**

(51) Internationale Patentklassifikation (IPC):
***G06N 3/045*** *(2023.01)* ***G06T 7/50*** *(2017.01)*

(52) Gemeinsame Patentklassifikation (CPC):
**G06T 7/50; G06N 3/0464;** G06T 2207/20084

(86) Internationale Anmeldenummer:
**PCT/EP2019/059087**

(87) Internationale Veröffentlichungsnummer:
**WO 2019/211068 (07.11.2019 Gazette 2019/45)**

(54) **VERFAHREN UND VORRICHTUNG ZUM ERMITTELN EINES TIEFENINFORMATIONSBILDS AUS EINEM EINGANGSBILD**

METHOD AND DEVICE FOR THE DETERMINATION OF A DEPTH-IMAGE FROM AN INPUT IMAGE

PROCEDE ET DISPOSITIF POUR LA DETERMINATION D'UNE IMAGE DE PROFONDEUR A PARTIR D'UNE IMAGE D'ENTREE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2018 DE 102018206848**

(43) Veröffentlichungstag der Anmeldung:
**10.03.2021 Patentblatt 2021/10**

(73) Patentinhaber: **Robert Bosch GmbH**
**70442 Stuttgart (DE)**

(72) Erfinder: **GROH, Konrad**
**70192 Stuttgart (DE)**

(56) Entgegenhaltungen:
**WO-A1-2018/052875 GB-A- 2 538 847**

- **DAVID EIGEN ET AL: "Depth Map Prediction from a Single Image using a Multi-Scale Deep Network", 9 June 2014 (2014-06-09), XP055566498, Retrieved from the Internet <URL:https://papers.nips.cc/paper/5539-depth-map-prediction-from-a-single-image-using-a-multi-scale-deep-network.pdf> [retrieved on 20190703]**
- **EIGEN DAVID ET AL: "Predicting Depth, Surface Normals and Semantic Labels with a Common Multi-scale Convolutional Architecture", 2015 IEEE INTERNATIONAL CONFERENCE ON COMPUTER VISION (ICCV), IEEE, 7 December 2015 (2015-12-07), pages 2650 - 2658, XP032866609, DOI: 10.1109/ICCV.2015.304**
- **DAN XU ET AL: "Monocular Depth Estimation using Multi-Scale Continuous CRFs as Sequential Deep Networks", ARXIV.ORG, CORNELL UNIVERSITY LIBRARY, 201 OLIN LIBRARY CORNELL UNIVERSITY ITHACA, NY 14853, 1 March 2018 (2018-03-01), XP080866404**
- **YIN XIAOCHUAN ET AL: "Scale Recovery for Monocular Visual Odometry Using Depth Estimated with Deep Convolutional Neural Fields", 2017 IEEE INTERNATIONAL CONFERENCE ON COMPUTER VISION (ICCV), IEEE, 22 October 2017 (2017-10-22), pages 5871 - 5879, XP033283468, DOI: 10.1109/ICCV.2017.625**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Technisches Gebiet

Die Erfindung betrifft Verfahren zur Bildverarbeitung, insbesondere Verfahren, um eine Tiefeninformation aus einem bereitgestellten Bild zu ermitteln. Die Erfindung betrifft weiterhin Verfahren zur Realisierung von Funktionen eines technischen Systems, insbesondere eines Roboters, eines Fahrzeugs, eines Werkzeugs oder einer Werkmaschine, wobei die Funktionen abhängig von einem Tiefeninformationsbild der Umgebung ausgeführt werden, oder zur Steuerung von Fahrzeugfunktionen basierend auf einem Tiefeninformationsbild.

Technischer Hintergrund

Es sind Funktionen eines technischen Systems bekannt, insbesondere eines Roboters, eines Fahrzeugs, eines Werkzeugs oder einer Werkmaschine, wobei die Funktionen abhängig von einem Tiefeninformationsbild der Umgebung ausgeführt werden. Beispielsweise basieren autonome oder halbautonome Fahrzeugfunktionen, gesteuert durch Fahrzeuge oder externe Einrichtungen, auf der sicheren Erkennung von Freifläche, Fahrzeugen und Menschen bzw. sonstigen Objekten in der Umgebung des Kraftfahrzeugs. Für eine Realisierung einer solchen Fahrfunktion in einem Kraftfahrzeug ist die Bilderfassung der Umgebung mit Hilfe einer oder mehrerer Kameras oder sonstigen Bilderfassungseinrichtungen Grundvoraussetzung.

Die erfassten Kamerabilder werden in geeigneter Weise ausgewertet, um beispielsweise die Fahrzeugumgebung zu segmentieren bzw. Objekte in der Fahrzeugumgebung zu erkennen. Von erheblicher Bedeutung ist dabei das Ermitteln einer Tiefeninformation für die einzelnen Bildpunkte bzw. Bildobjekte der erfassten Bilder. Die Tiefeninformation ermöglicht oder vereinfacht u. a. die Zuordnung von Bildbereichen zu einzelnen Objekten, was für eine zuverlässige Segmentierung des zu untersuchenden Bildes vorteilhaft ist.

Bisherige Verfahren zum Erstellen solcher Tiefeninformationsbilder, d. h. mit Tiefeninformation versehener Bilder bzw. Bilder, die einer Tiefenkarte entsprechen und die Tiefe jedes Bildpunktes eines Referenzbildes angeben, nutzen in der Regel Stereokameras zur Erfassung von Stereobildern. Durch Identifikation von Merkmalen in der aufgezeichneten Szene können basierend auf Bildunterschieden zwischen den zwei Stereobildern Distanzen der erfassten Merkmale ermittelt werden und daraus eine Tiefenkarte erstellt werden. David Eigen ET AL: "Depth Map Prediction from a Single Image using a Multi-Scale Deep Network", 9. Juni 2014, beschreibt ein Computerimplementiertes Verfahren zum Ermitteln eines Tiefeninformationsbilds für ein Eingangsbild, um insbesondere abhängig von dem Tiefeninformationsbild Fahrzeugfunktionen anzusteuern, wobei das Eingangsbild mithilfe eines konvolutionellen neuronalen Netzes verarbeitet wird, wobei das konvolutionelle neuronale Netz mehrere Schichten aufweist, die das Eingangsbild (B) sequentiell bearbeiten und jeweils eine Eingangsmerkmalskarte (MKI) in eine Ausgangsmerkmalskarte (MKO) umsetzen, wobei mindestens eine der Schichten als eine Tiefenkartenschicht ausgebildet ist, wobei das Tiefeninformationsbild abhängig von einer Tiefenkartenschicht ermittelt wird, wobei in der Tiefenkartenschicht eine Eingangsmerkmalskarte der Tiefenkartenschicht mit mehreren Skalierungsfiltern gefaltet wird, um jeweilige Skalierungskarten zu erhalten.

Eine Ermittlung von Tiefeninformationsbildern basierend auf einem mit Hilfe einer Monokamera nicht-stereoskopisch erfassten Eingangsbild ist bislang nicht bekannt bzw. nicht zuverlässig umgesetzt.

Offenbarung der Erfindung

Erfindungsgemäß sind ein Verfahren zum Ermitteln eines Tiefeninformationsbilds aus einem Eingangsbild gemäß Anspruch 1 sowie eine Vorrichtung und ein Bildverarbeitungssystem gemäß den nebengeordneten Ansprüchen vorgesehen. Weitere Ausgestaltungen sind in den abhängigen Ansprüchen angegeben.

Gemäß einem ersten Aspekt ist ein Computerimplementiertes Verfahren zum Ermitteln eines Tiefeninformationsbilds für ein Eingangsbild, wobei das Eingangsbild mithilfe eines konvolutionellen neuronalen Netzes verarbeitet wird, wobei das konvolutionelle neuronale Netz mehrere Schichten aufweist, die das Eingangsbild sequentiell bearbeiten und jeweils eine Eingangsmerkmalskarte in eine Ausgangsmerkmalskarte umsetzen, wobei eine der Schichten als eine Tiefenkartenschicht ausgebildet ist, wobei das Tiefeninformationsbild abhängig von einer Tiefenkartenschicht ermittelt wird, wobei in der Tiefenkartenschicht

- eine Eingangsmerkmalskarte der Tiefenkartenschicht mit mehreren Skalierungsfiltern gefaltet wird, um jeweilige Skalierungskarten zu erhalten, wobei die Skalierungsfilter abhängig von einem vorgegebenen Filter durch vorgegebene Skalierungen dieses vorgegebenen Filters erzeugt wurden;
- die mehreren Skalierungskarten pixelweise verglichen werden, um eine jeweilige Ausgangsmerkmalskarte zu generieren, in der jeder Pixel einem entsprechenden Pixel aus einer ausgewählten der Skalierungskarten entspricht,
- eine Skalierungsmerkmalskarte generiert wird, indem jeder Pixel der Skalierungsmerkmalskarte einer Angabe zugeordnet wird, die diejenige Skalierungskarte angibt, aus der der Pixel der Ausgangsmerkmalskarte ausgewählt ist;

wobei das Tiefeninformationsbild der Skalierungsmerkmalskarte entspricht oder abhängig von der Skalierungsmerkmalskarte bestimmt wird.

Weiterhin kann die ausgewählte Skalierungskarte derjenigen Skalierungskarte entsprechen, die für den jeweiligen Pixel den größten Pixelwert enthält.

Das obige Verfahren nutzt eine Merkmalserkennung in verschiedenen durch die Skalierungsfilter vorgegebenen Skalierungen. Dadurch kann durch Auswertung der unterschiedlichen auf Grundlage der Skalierungsfilter erhaltenen Skalierungskarten, die den entsprechenden unterschiedlichen Skalierungen zugeordnet sind, erkannt werden kann, in welcher Größe ein Merkmal in dem zu untersuchenden Bild auftritt. Die Größe des Merkmals beinhaltet - für bestimmte zu erkennende Objekte - dann eine Information darüber, welcher Abstand das zu dem Merkmal gehörende Objekt von der das Bild erfassenden Kamera hat. Durch die Anwendung von Skalierungsfiltern verschiedener Skalierungen kann somit ein bestimmtes Objekt unabhängig von dessen Abstand zur erfassenden Kamera durch jeweils mindestens einen der Skalierungsfilter identifiziert werden. Das obige Verfahren nutzt nun die Information, welcher der Skalierungsfilter für die Identifikation des Objektes maßgeblich war, um daraus eine Distanz zu dem betreffenden Objekt abzuschätzen.

Wird ein Kanal eines Eingangsbildes durch eine oder mehrere Schichten eines konvolutionellen neuronalen Netzes mit verschiedenen Skalierungsfiltern (Kerneln) gefaltet, so ergeben sich Skalierungskarten, die in einem nachfolgenden Max-Pooling-Schritt für eine Ausgangsmerkmalskarte verknüpft werden. Der Max-Pooling-Schritt entspricht einer Pixel für Pixel angewendeten Maximalauswahl der Pixelwerte, wobei der jeweilige Maximalwert den identischen Pixeln zugeordneten Pixelwerte der Skalierungskarten in die Ausgangsmerkmalskarte eingetragen wird.

Gleichzeitig wird in einer Skalierungsmerkmalskarte für jedes Pixel der Ausgangsmerkmalskarte eine Skalierungsangabe eingetragen, die denjenigen Skalierungsfilter angibt, der zu dem maximalen Pixelwert geführt hat. Für die einzelnen Kanäle der Eingangsmerkmalskarte der einen oder mehreren Berechnungsschichten des konvolutionellen neuronalen Netzes werden so Skalierungsmerkmalskarten ermittelt. Abhängig von der einen oder den mehreren so bestimmten Skalierungsmerkmalskarten kann ein Tiefeninformationsbild für das zu untersuchende Bild angegeben werden.

Das obige Verfahren hat den Vorteil, dass aus einem einfachen, d. h. nicht stereoskopisch vorliegenden Bild eine Tiefeninformation für die in dem Bild dargestellten Merkmale ermittelt werden kann. Die Tiefeninformation ergibt sich dabei aus einer Skalierung, die demjenigen Skalierungsfilter zugeordnet ist, der das durch den Skalierungsfilter angegebene Merkmal am besten erkennt.

Weiterhin können die Skalierungsfilter aus einem Filterkernel des trainierten konvolutionellen neuronalen Netzes durch Down-Sampling bestimmt werden.

Es kann vorgesehen sein, dass das konvolutionelle neuronale Netz mehrere Tiefenkartenschichten aufweist, um mehrere Skalierungsmerkmalskarten zu ermitteln, wobei das Tiefeninformationsbild aus den mehreren Skalierungsmerkmalskarten mithilfe eines weiteren neuronalen Netzes ermittelt wird.

Weiterhin können die mehreren Skalierungskarten in einem Kombinierprozess pixelweise verglichen werden, um aus den jeweiligen maximalen Pixelwerten weiterhin die Ausgangsmerkmalskarte, die als Eingangsmerkmalskarte einer nachfolgenden Berechnung einer weiteren Schicht des konvolutionellen neuronalen Netzwerkes dient, zu erhalten oder ein Ausgangsbild zu erhalten.

Weiterhin kann das Tiefeninformationsbild aus den mehreren Skalierungsmerkmalskarten und einer oder mehreren Ausgangsmerkmalskarten einer oder mehrerer der Schichten des neuronalen Netzes und/oder eines Ausgangsbilds des neuronalen Netzes ermittelt werden.

Es kann vorgesehen sein, dass das neuronale Netz ein Ausgangsbild generiert, wobei mindestens eine der Schichten eine Ausgangsmerkmalskarte und/oder das Ausgangsbild abhängig von einer oder mehreren der Skalierungsmerkmalskarten generiert, wobei dazu insbesondere die eine oder die mehreren der Skalierungsmerkmalskarten der betreffenden Schicht zugeführte Eingangsmerkmalskarte hinzugefügt wird.

Gemäß einer Ausführungsform kann in einem nachgeschalteten zusätzlichen neuronalen Netz das Ausgangsbild und das Tiefeninformationsbild gemeinsam verarbeitet werden, wobei das zusätzliche neuronale Netz das Ausgangsbild und das Tiefeninformationsbild zu einem segmentierten Bild verarbeitet.

Gemäß einem weiteren Aspekt ist eine Vorrichtung zum Ermitteln eines Tiefeninformationsbilds für ein Eingangsbild vorgesehen, um insbesondere abhängig von dem Tiefeninformationsbild Fahrzeugfunktionen anzusteuern, wobei das Eingangsbild mithilfe eines konvolutionellen neuronalen Netzes verarbeitet wird, wobei das konvolutionelle neuronale Netz mehrere Schichten aufweist, die das Eingangsbild sequentiell bearbeiten und jeweils eine Eingangsmerkmalskarte in eine Ausgangsmerkmalskarte umsetzen, wobei mindestens eine der Schichten als eine Tiefenkartenschicht ausgebildet ist, wobei das Tiefeninformationsbild abhängig von einer Tiefenkartenschicht ermittelt wird, wobei die Vorrichtung ausgebildet ist, um für die mindestens eine Tiefenkartenschicht:

- eine Eingangsmerkmalskarte der betreffenden Tiefenkartenschicht mit mehreren Skalierungsfiltern zu falten, um jeweilige Skalierungskarten zu erhalten, wobei die Skalierungsfilter abhängig von einem vorgegebenen Filter durch vorgegebene Skalierungen dieses vorgegebenen Filters erzeugt wurden;

- die mehreren Skalierungskarten pixelweise zu vergleichen, um eine jeweilige Ausgangsmerkmalskarte zu generieren, in der jeder Pixel einem entsprechenden Pixel aus einer ausgewählten der Skalierungskarten entspricht,

- eine Skalierungsmerkmalskarte zu generieren, indem jeder Pixel der Skalierungsmerkmalskarte einer Angabe zugeordnet wird, die diejenige Skalierungskarte angibt, aus der der Pixel der Ausgangsmerkmalskarte ausgewählt ist;

wobei das Tiefeninformationsbild der Skalierungsmerkmalskarte entspricht oder abhängig von der Skalierungsmerkmalskarte bestimmt wird.

Gemäß einem weiteren Aspekt ist ein System vorgesehen, umfassend:

- eine Bilderfassungseinrichtung zum Erfassen eines Eingangsbilds;
- eine Vorverarbeitungseinrichtung, die durch die obige Vorrichtung zum Bereitstellen eines Tiefeninformationsbilds abhängig von dem Eingangsbild realisiert ist; und
- ein Steuergerät zum Ansteuern mindestens eines Aktors des Systems abhängig von dem Tiefeninformationsbild.

Kurzbeschreibung der Zeichnungen

Ausführungsformen werden nachfolgend anhand der beigefügten Zeichnungen näher erläutert. Es zeigen:

Figur 1 eine schematische Darstellung einer Ermittlung eines segmentierten Bilds mit einer Tiefeninformation aus einem Eingangsbild;

Figur 2 eine schematische Darstellung der Struktur zum Erhalten eines Tiefeninformationsbilds aus mehreren Skalierungsmerkmalskarten;

Figur 3 ein Flussdiagramm zur Veranschaulichung eines Verfahrens zum Ermitteln einer Tiefeninformation für Objekte in einem nicht-stereoskopisch vorliegenden zu untersuchenden Eingangsbild; und

Figur 4 eine schematische Darstellung der Struktur zum Erhalten eines segmentierten Ausgangsbilds aus mehreren Skalierungsmerkmalskarten und mithilfe eines neuronalen Netzes zur semantischen Segmentierung.

Beschreibung von Ausführungsformen

Figur 1 zeigt eine schematische Darstellung eines Bildverarbeitungssystems 1 zur Durchführung eines Verfahrens zum Ermitteln einer Tiefeninformation für ein nicht-stereoskopisch bereitgestelltes Eingangsbild B in Form eines Tiefeninformationsbildes. Das Bildverarbeitungssystem 1 umfasst eine Verarbeitungseinrichtung, in der ein erstes konvolutionelles neuronales Netz 2 mit mehreren Schichten 21 implementiert ist.

Ein konvolutionelles neuronales Netz wird in an sich bekannter Weise durch kaskadiertes Berechnen von Merkmalskarten berechnet. Das konvolutionelle neuronale Netz kann dazu verschiedene Arten von Berechnungsschichten umfassen, wobei die Schichten eine oder mehrere Konvolutionsschichten 21 umfassen. Bei einer Faltungsschicht 21 wird auf einen Ausschnitt einer Eingangsmerkmalskarte, die für die erste Berechnungsschicht dem Eingangsbild entsprechen kann, ein Filterkernel angewendet, um eine Ausgangsmerkmalskarte der betreffenden Schicht zu erzeugen. Der Filterkernel entspricht einer Faltungsmatrix mit Gewichtungswerten. Dabei wird dem aktuell dem Filterkernel unterliegenden Bildausschnitt jeweils ein Pixel der Ausgangsmerkmalskarte zugeordnet und der entsprechende Pixelwert durch deren inneres Produkt berechnet. Die Gewichtungswerte werden mit den entsprechenden Pixelwerten des Ausschnitts der Eingangsmerkmalskarte multipliziert, wobei die Ergebnisse aller Multiplikationen eines Filterkernels addiert werden, um den entsprechenden Pixelwert der Ausgangsmerkmalskarte zu erhalten.

Bei mehrschichtigen konvolutionellen neuronalen Netzen wird üblicherweise die Ausgangsmerkmalskarte als Eingangsmerkmalskarte einer nächsten Berechnungsschicht oder - bei der letzte Berechnungsschicht - als Ausgangsbild vorgesehen.

Das erste neuronale Netz 2 des Bildverarbeitungssystems 1 sieht beispielhaft mehrere kaskadierte Standard-Konvolutionsschichten 21 vor, wobei im dargestellten Ausführungsbeispiel eine erste Schicht als Tiefenkartenschicht 22 vorgesehen ist. Allgemein können in dem neuronalen Netz 2 mehrere der ersten Schichten als Tiefenkartenschichten 22 vorgesehen. In nachfolgenden (tieferen) Schichten können diese ebenfalls eingesetzt werden, typischerweise sind diese Schichten aber als Standard-Konvolutionsschichten 21 ausgebildet.

Die Tiefenkartenschicht 22 weist eine von den übrigen Schichten des ersten konvolutionellen neuronalen Netzes 2 abweichende Implementierung auf, bei der die betreffende Eingangsmerkmalskarte (in diesem Fall das Eingangsbild B) mit mehreren verschiedenen Skalierungskerneln 23 verarbeitet wird.

Die Skalierungskernel 23 entsprechen einem Filterkernel einer Konvolutionsschicht des konvolutiellen neuronalen Netzes 2, der in verschiedenen Skalierungen vorgesehen ist, so dass mehrere Skalierungskernel 23 gebildet werden. Diese ergeben sich durch Vorgabe des größten Skalierungskernels 23a als dem Filterkernel mit der größten Anzahl von Gewichtungen und durch Down-Sampling des größten Skalierungskernels 23a zu den übrigen Skalierungskerneln 23b, 23c. Der als der größte Skalierungskernel 23a angenommene Filterkernel kann vorgegeben sein oder sich aus einem Training des konvolutionellen neuronalen Netzes 2 mit entsprechenden Trainingsdaten ergeben. Die Anzahl der Skalierungskernel 23 pro Schicht ist beliebig wählbar, beträgt jedoch vorzugsweise 2 bis 10, weiter bevorzugt 3 bis 5.

Down-Sampling bezeichnet allgemein die Reduktion der Stützstellen einer Zeitreihe oder anderer Anordnungen diskreter Werte. Hier wird die Größe der Matrix der Gewichtungswerte des Filterkernels entsprechend durch Zusammenfassung der Gewichtungswerte reduziert.

Im einfachsten Fall entspricht das "Downsampling" eine Matrixmultiplikation. Dabei wird ein großer Filter *X* eines großen Skalierungskernels auf einen kleinen Filter *Y* abgebildet:

$$Y = AXA^T$$

Als Beispiel für ein Downsampling eines 5x5x1 Filters zu einem 3x3x1-Filter:

$$A = \frac{1}{3}\begin{bmatrix} 3 & 0 & 0 \\ 2 & 1 & 0 \\ 0 & 3 & 0 \\ 0 & 1 & 2 \\ 0 & 0 & 3 \end{bmatrix}$$

Dann ist:

$$Y = A^T X A = \frac{1}{9}\begin{bmatrix} 3 & 2 & 0 & 0 & 0 \\ 0 & 1 & 3 & 1 & 0 \\ 0 & 0 & 0 & 2 & 3 \end{bmatrix}\begin{bmatrix} \cdot & \cdot & \cdot & \cdot & \cdot \\ \cdot & \cdot & \cdot & \cdot & \cdot \\ \cdot & \cdot & \cdot & \cdot & \cdot \\ \cdot & \cdot & \cdot & \cdot & \cdot \\ \cdot & \cdot & \cdot & \cdot & \cdot \end{bmatrix}\begin{bmatrix} 3 & 0 & 0 \\ 2 & 1 & 0 \\ 0 & 3 & 0 \\ 0 & 1 & 2 \\ 0 & 0 & 3 \end{bmatrix} = \begin{bmatrix} \# & \# & \# \\ \# & \# & \# \\ \# & \# & \# \end{bmatrix}$$

Gegebenenfalls wird Y noch mit einem frei wählbaren Faktor multipliziert.

Für einen Kernel mit mehreren (k) Features, etwa 5x5xk, führt man die diese Operation für jedes der k Features aus. Neben dem obigen Verfahren können in dem Downsamplingverfahren auch folgende Verfahren verwendet werden: Nearest neighbors, cubic, bicubic, area-interploation, bilinear oder Pooling.

Durch die Verarbeitung der Eingangsmerkmalskarte MKI mit den mehreren Skalierungskerneln 23a, 23b, 23c werden durch Faltung entsprechende Skalierungskarten 24a, 24b, 24c ermittelt, die den Skalierungskerneln 23a, 23b, 23c jeweils zugeordnet sind. Die Verarbeitung erfolgt in der bei konvolutionellen neuronalen Netzen üblichen Weise, wobei jeder Pixelwert der Skalierungskarte 24a, 24b, 24c durch Anwenden des zugeordneten Skalierungsfilters 23a, 23b, 23c auf den entsprechenden Ausschnitt der Eingangsmerkmalskarte MKI errechnet wird.

Die so erhaltenen Skalierungskarten 24a, 24b, 24c werden einem Kombinierprozess 25 zugeführt, der einem Max-Pooling-Prozess ähnelt. In dem Kombinierprozess wird durch pixelweises Vergleichen der Skalierungskarten 24a, 24b, 24c der jeweilige Maximalwert der Pixelwerte in die entsprechende Ausgangsmerkmalskarte MKO übernommen. Diese Ausgangsmerkmalskarte MKO kann nun als Eingangsmerkmalskarte für die nächste Schicht des neuronalen Netzes 2 dienen, die eine Standard-Konvolutionsschicht 21 oder eine Tiefenkartenschicht 22 sein kann, oder, wenn die berechnende Schicht eine letzte Schicht des neuronalen Netzes 2 ist, dem Ausgangsbild A der Verarbeitung durch das neuronale Netz 2, beispielsweise einem segmentierten Bild, entsprechen kann.

Bei dem Kombinierprozess 25 für die Skalierungskarten 24a, 24b, 24c erhält man neben dem maximalen Pixelwert eine Angabe, aus welcher der Skalierungskarten 24a, 24b, 24c der maximale Pixelwert (argmax-Funktion) errechnet worden ist. Die Skalierungskarten 24a, 24b, 24c sind den entsprechenden Skalierungskerneln 23a, 23b, 23c und damit entsprechenden Skalierungen zugeordnet, so dass mit der Angabe der für den maximalen Pixelwert verantwortlichen Skalierungskarte 24a, 24b, 24c auch eine Angabe über die Größe/Skalierung des zugeordneten Skalierungskernels 23a, 23b, 23c vorliegt. Die Angabe über die den maximalen Pixelwert liefernde Skalierungskarte 24 wird in die Skalierungsmerkmalskarte SK geschrieben, so dass für jeden Pixel der Ausgangsmerkmalskarte MKO in der Skalierungsmerkmalskarte SK eine Angabe vorliegt, welche der Skalierungskarten 24a, 24b, 24c bzw. welche Größe des Skalierungskernels 23a, 23b, 23c für die Auswahl des maximalen Pixelwerts in der Ausgangsmerkmalskarte MKO verantwortlich war.

Die Skalierungsmerkmalskarte SK kann unmittelbar als eine Tiefenkarte TK verwendet werden oder in einem Bearbeitungsblock 3 in die Tiefenkarte TK umgesetzt werden. Die Tiefenkarte TK entspricht einem Tiefeninformationsbild, das einen Abstand jedes einzelnen Bildpunktes (Pixels) von der Kameraebene angibt. Der Bearbeitungsblock 3 kann einem einfachen Funktionsblock oder einem trainierbaren neuronalen Netz entsprechen.

Alternativ können, wie in Figur 2 schematisch dargestellt, mehrere Tiefenkartenschichten 22 kaskadiert angewendet werden, um so mehrere Skalierungsmerkmalskarten SK1, SK2, SK3, SKn zu erhalten. Somit liegt für jede betreffende Eingangsmerkmalskarte MKI der Tiefenkartenschichten 22 neben der jeweiligen Ausgangsmerkmalskarte MKO eine entsprechende Skalierungsmerkmalskarte SK vor. Die mehreren Skalierungsmerkmalskarten SK1, SK2, SK3, ..., SKn können entsprechend in einem als weiteres neuronales Netz ausgebildeter Bearbeitungsblock 3 verarbeitet werden, um eine Tiefenkarte TK für das z.B. segmentierte Ausgangsbild A zu erhalten.

Zusätzlich kann die Verarbeitung in dem Bearbeitungsblock 3 neben der einen oder den mehreren Skalierungsmerkmalskarte SK, Sk1, Sk2..., SKn auch das aktuelle Ausgangsbild A verarbeiten, um die Tiefenkarte TK zu erhalten.

Alternativ oder zusätzlich kann die Verarbeitung in dem neuronalen Netz 2 auch die eine oder die mehreren Skalierungsmerkmalskarte SK, Sk1, Sk2..., SKn oder eine daraus ermittelte Tiefenkarte TK berücksichtigen, um das aktuelle Ausgabebild A zu erhalten.

Das Ausgangsbild A kann ein segmentiertes Bild darstellen, in dem die Tiefeninformation von mehreren Skalierungsmerkmalskarten Sk1, Sk2..., SKn verarbeitet sind. Das Ausgangsbild kann dann ein Tiefeninformationsbild darstellen. Dazu kann wie in Figur 4 gezeigt ein neuronales Netz 2' zur semantischen Segmentierung verwendet werden, das einen Encoderteil 27 mit Tiefenkartenschichten 22 und ggfs weiteren Schichten eines herkömmlichen konvolutionellen neuronalen Netzes und einen Decoderteil 26 aufweist. Der Decoderteil 26 weist Decodierschichten 28 auf, die das durch das neuronale Netz 2‘ propagierte Eingangsbild B gemeinsam mit einer jeweiligen Skalierungsmerkmalskarte SK1, SK2, SK3,... der betreffenden Tiefenkartenschicht 22 des Encoderteils 27 verarbeiten. Im Ergebnis erhalt man ein segmentiertes Bild basierend auf dem neuronalen Netz 2' und der zusätzlich generierten Tiefeninformationen der Skalierungskarten 22. Die dargestellte Kombination aus Encoderteil 27 und Decoderteil 26 bildet ein Segmentierungsnetzwerk wie es beispielsweise aus Hyeonwoo Noh et al., "Learning Deconvolution Network for Semantic Segmentation", Computer Vision and Pattern Recognition, https://arxiv.org/abs/1505.04366 bekannt ist. Der durch die Konfiguration des Netzwerks gebildete latente Raum zwischen dem Encoderteil 27 und dem Decoderteil 26 (entsprechen einem Autoencoder-Netzwerk) dient eine Reduktion der Datenmenge zur Beschreibung des Eingangsbilds, wobei die Abbildung im latenten Raum durch den Dekodierer als Segmentierungsbild interpretiert wird.

Die Decodierschichten 28 verarbeiten die Skalierungsmerkmalskarten Sk1, Sk2..., SKn, indem diese eingangsseitig an den jeweiligen Eingangsvektor/Eingangstensor der betreffenden Dekodierschicht 28 angehangen wird.

Zum Trainieren des Bildverarbeitungssystems der Figur 1 werden das neuronale Netz 2 und das weitere neuronale Netz des Bearbeitungsblocks 3 mehrstufig und/oder abwechselnd trainiert und fixiert, da die Funktion argmax nicht ableitbar ist und somit ein Backpropagation-Verfahren nicht verwendet werden kann. Daher werden zunächst die Filterkernel des neuronalen Netzes 2 mithilfe von Trainingsbildern in herkömmlicher Weise trainiert. Nun werden Trainingsbilder an das neuronale Netz 2 in oben beschriebener Weise angelegt, um die Skalierungsmerkmalskarte SK1, SK2, SK3, ...SKn zu erhalten. Dazu sind den Trainingsbildern jeweils Trainings-Segmentierungsbilder zugeordnet, so dass die Parameter des ersten neuronalen Netzes 2 trainiert werden können. Die so trainierten Parameter werden nun fixiert und für die Filterkernel der Tiefenkartenschichten 22 entsprechend Skalierungskernel z.B. mithilfe des oben beschriebenen Downsamplings ermittelt.

Aus den Trainingsbildern werden nun mithilfe der Skalierungskernel 23 Trainings- Skalierungsmerkmalskarten SK1, SK2, SK3, ...SKn ermittelt, die dem jeweiligen Trainingsbild zugeordnet sind. Mithilfe von den Trainingsbildern zugeordneten Trainingstiefenkarten, die zu den Trainingsbildern Tiefeninformation bereitstellen, kann nun das zweite neuronale Netz 3 trainiert werden. Dies basiert auf den bei eingangsseitigem Anlegen von Trainingsbildern erhaltenen Skalierungsmerkmalskarten SK1, SK2, SK3, ...SKn und der dem jeweiligen Trainingsbild zugeordneten vorgegebenen Trainingstiefenkarte. Das zweite neuronale Netz 3 kann dazu ebenfalls als herkömmliches, konvolutionelles Netz ausgebildet sein.

Das Verfahren zum Ermitteln der Tiefenkarte TK wird nachfolgend anhand des Flussdiagramms der Figur 3 näher erläutert.

In Schritt S1 wird ein Eingangsbild B bereitgestellt, das durch das vorgegebene konvolutionelle neuronale Netz 2, das zum Ermitteln eines segmentierten Bildes angewendet werden soll, verarbeitet wird.

In Schritt S2 wird gemäß Konfiguration des neuronalen Netzes 2 überprüft, ob die erste/nächste zu berechnende Schicht einer Tiefenkartenschicht 22 oder einer herkömmlichen Schicht 21 des neuronalen Netzes 2 entspricht. Entspricht die nächste zu berechnende Schicht einer Tiefenkartenschicht (Alternative. "1"), so wird das Verfahren mit Schritt S3 fortgesetzt, anderenfalls (Alternative: "2"), wird das Verfahren mit Schritt S4 fortgesetzt.

In Schritt S3 wird wie oben beschrieben die Ausgangsmerkmalskarte MKO und gleichzeitig die zugehörige Skalierungsmerkmalskarte SK basierend auf den mehreren Skalierungsfiltern 23, wie oben beschrieben, ermittelt.

In dem alternativen Schritt S4 wird die entsprechende Ausgangsmerkmalskarte MKO basierend auf der Funktion der herkömmlichen Schicht 21 ermittelt.

In Schritt S5 wird überprüft, ob das neuronale Netz 2 eine weitere zu berechnende Schicht aufweist. Ist dies der Fall (Alternative: Ja) wird die Ausgangsmerkmalskarte MKO als Eingangsmerkmalskarte der nächsten Schicht angenommen und das Verfahren mit Schritt S2 fortgesetzt. Anderenfalls wird das Verfahren mit Schritt S6 fortgesetzt.

Da keine weiteren Berechnungsschritte vorgesehen sind, wird in Schritt S6 die Ausgangsmerkmalskarte als das Ausgangsbild A ausgegeben

In Schritt S7 können die zuvor erhaltenen Skalierungsmerkmalskarte SK dem weiteren entsprechend trainierten neuronalen Netz des Bearbeitungsblocks 3 zugeführt werden, um die Tiefenkarte TK aus den Skalierungsmerkmalskarten SK zu bestimmen. Die Tiefenkarte TK entspricht dann dem Tiefeninformationsbild.

So können Tiefeninformationsbilder aus nicht-stereoskopischen Eingangsbildern bestimmt werden, die von einer Kamera eines technischen Systems, insbesondere eines Roboters, eines Fahrzeugs, eines Werkzeugs oder einer Werkmaschine, aufgezeichnet werden.

In Figur 5 ist ein technisches System 10 dargestellt, das eine Kamera 11 zur Erfassung eines Eingangsbildes, eine Vorverarbeitung 12 und ein Steuergerät 13 zur Ausführung von Steuerfunktionen aufweist. Die Vorverarbeitung 12 führt basierend auf einem von der Kamera 11 erfassten Eingangsbild obiges Verfahren zum Ermitteln eines Tiefeninformationsbilds (Tiefenkarte TK) und ggfs eines Ausgangsbilds A aus.

Durch das Steuergerät 13 werden Funktionen des technischen Systems 10 realisiert, die Tiefeninformationen von Kamerabildern benötigen, aber keine stereoskopische Erfassung von Bildern ermöglichen. Das Steuergerät 13 verarbeitet ggfs neben weiteren Eingangsgrößen das Tiefeninformationsbild zu einer oder mehreren Ausgangsgrößen. Abhängig von den Ausgangsgrößen des Steuergeräts 13 wird durch eine Recheneinheit mindestens ein Aktor 14 des technischen Systems mit einem entsprechenden Ansteuersignal angesteuert. Beispielsweise kann so eine Bewegung eines Roboters oder Fahrzeugs gesteuert werden oder eine Steuerung einer Antriebseinheit oder eines Fahrerassistenzsystems eines Fahrzeugs erfolgen.

## Patentansprüche

1. Computerimplementiertes Verfahren zum Ermitteln eines Tiefeninformationsbilds für ein Eingangsbild (B), um insbesondere abhängig von dem Tiefeninformationsbild Fahrzeugfunktionen anzusteuern, wobei das Eingangsbild (B) mithilfe eines konvolutionellen neuronalen Netzes (2) verarbeitet wird, wobei das konvolutionelle neuronale Netz (2) mehrere Schichten aufweist, die das Eingangsbild (B) sequentiell bearbeiten und jeweils eine Eingangsmerkmalskarte (MKI) in eine Ausgangsmerkmalskarte (MKO) umsetzen, wobei mindestens eine der Schichten als eine Tiefenkartenschicht ausgebildet ist, wobei das Tiefeninformationsbild abhängig von einer Tiefenkartenschicht ermittelt wird, wobei in der Tiefenkartenschicht (22)

   - eine Eingangsmerkmalskarte (MKI) der Tiefenkartenschicht (22) mit mehreren Skalierungsfiltern (23, 23a, 23b, 23c) gefaltet wird, um jeweilige Skalierungskarten (24a, 24b, 24c) zu erhalten, wobei die Skalierungsfilter abhängig von einem vorgegebenen Filter durch vorgegebene Skalierungen dieses vorgegebenen Filters erzeugt wurden;
   - die mehreren Skalierungskarten (24a, 24b, 24c) pixelweise verglichen werden, um eine jeweilige Ausgangsmerkmalskarte (MKO) zu generieren, in der jeder Pixel einem entsprechenden Pixel aus einer ausgewählten der Skalierungskarten (24a, 24b, 24c) entspricht,
   - eine Skalierungsmerkmalskarte (SK) generiert wird, indem jeder Pixel der Skalierungsmerkmalskarte (SK) einer Angabe zugeordnet wird, die diejenige Skalierungskarte (24a, 24b, 24c) angibt, aus der der Pixel der Ausgangsmerkmalskarte (MKO) ausgewählt ist;

   wobei das Tiefeninformationsbild der Skalierungsmerkmalskarte (SK) entspricht oder abhängig von der Skalierungsmerkmalskarte (SK) bestimmt wird.

2. Verfahren nach Anspruch 1, wobei die ausgewählte Skalierungskarte (24a, 24b, 24c) derjenigen Skalierungskarte entspricht, die für den jeweiligen Pixel den größten Pixelwert enthält.

3. Verfahren nach Anspruch 2, wobei die Skalierungsfilter aus einem Filterkernel des trainierten konvolutionellen neuronalen Netzes durch Down-Sampling oder Up-sampling bestimmt werden.

**4.** Verfahren nach einem der Ansprüche 1 bis 3, wobei mehrere Skalierungsmerkmalskarten (SK) in mehreren Tiefenkartenschichten (22) ermittelt werden, wobei das Tiefeninformationsbild aus den mehreren Skalierungsmerkmalskarten (SK) mithilfe eines weiteren neuronalen Netzes (3) ermittelt wird, wobei das Tiefeninformationsbild insbesondere einer Tiefenkarte (TK) entspricht.

**5.** Verfahren nach Anspruch 3, wobei das Tiefeninformationsbild aus den mehreren Skalierungsmerkmalskarten (SK) und einer oder mehreren Ausgangsmerkmalskarten (MKO) einer oder mehrerer der Schichten des neuronalen Netzes (2) und/oder eines Ausgangsbilds (A) des neuronalen Netzes (2) ermittelt wird.

**6.** Verfahren nach einem der Ansprüche 1 bis 5, wobei das neuronale Netz ein Ausgangsbild (A) generiert, wobei mindestens eine der Schichten (21) eine Ausgangsmerkmalskarte (MKO) und/oder das Ausgangsbild (A) abhängig von einer oder mehreren der Skalierungsmerkmalskarten (SK) generiert, wobei dazu insbesondere die eine oder die mehreren der Skalierungsmerkmalskarten (SK) der betreffenden Schicht zugeführte Eingangsmerkmalskarte (MKI) hinzugefügt wird.

**7.** Verfahren nach Anspruch 6, wobei in einem nachgeschalteten zusätzlichen neuronalen Netz das Ausgangsbild (A) und das Tiefeninformationsbild gemeinsam verarbeitet werden, wobei das zusätzliche neuronale Netz das Ausgangsbild (A) und das Tiefeninformationsbild zu einem segmentierten Bild verarbeitet.

**8.** Verfahren nach einem der Ansprüche 1 bis 7, wobei das Tiefeninformationsbild genutzt wird, eine Fahrzeugfunktion anzusteuern, die insbesondere einen voll-autonomen oder halb-autonomen Fahrbetrieb oder eine Fahrerassistenzfunktion zur Warnung vor Umgebungsobjekten betrifft.

**9.** Vorrichtung zum Ermitteln eines Tiefeninformationsbilds für ein Eingangsbild (B), um insbesondere abhängig von dem Tiefeninformationsbild Fahrzeugfunktionen anzusteuern, wobei das Eingangsbild (B) mithilfe eines konvolutionellen neuronalen Netzes (2) verarbeitet wird, wobei das konvolutionelle neuronale Netz (2) mehrere Schichten aufweist, die das Eingangsbild (B) sequentiell bearbeiten und jeweils eine Eingangsmerkmalskarte (MKI) in eine Ausgangsmerkmalskarte (MKO) umsetzen, wobei mindestens eine der Schichten als eine Tiefenkartenschicht (22) ausgebildet ist, wobei das Tiefeninformationsbild abhängig von einer Tiefenkartenschicht (22) ermittelt wird, wobei die Vorrichtung ausgebildet ist, um für die mindestens eine Tiefenkartenschicht (22):

- eine Eingangsmerkmalskarte (MKI) der betreffenden Tiefenkartenschicht (22) mit mehreren Skalierungsfiltern zu falten, um jeweilige Skalierungskarten (24a, 24b, 24c) zu erhalten, wobei die Skalierungsfilter abhängig von einem vorgegebenen Filter durch vorgegebene Skalierungen dieses vorgegebenen Filters erzeugt wurden,
- die mehreren Skalierungskarten (24a, 24b, 24c) pixelweise zu vergleichen, um eine jeweilige Ausgangsmerkmalskarte (MKO) zu generieren, in der jeder Pixel einem entsprechenden Pixel aus einer ausgewählten der Skalierungskarten (24a, 24b, 24c) entspricht,
- eine Skalierungsmerkmalskarte (SK) zu generieren, indem jeder Pixel der Skalierungsmerkmalskarte (SK) einer Angabe zugeordnet wird, die diejenige Skalierungskarte (24a, 24b, 24c) angibt, aus der der Pixel der Ausgangsmerkmalskarte (MKO) ausgewählt ist;

wobei das Tiefeninformationsbild der Skalierungsmerkmalskarte (SK) entspricht oder abhängig von der Skalierungsmerkmalskarte (SK) bestimmt wird.

**10.** System (10) umfassend:

- eine Bilderfassungseinrichtung (11) zum Erfassen eines Eingangsbilds (B)
- eine Vorverarbeitungseinrichtung (12) entsprechend der Vorrichtung nach Anspruch 9 zum Bereitstellen eines Tiefeninformationsbilds abhängig von dem Eingangsbild;
- ein Steuergerät (13) zum Ansteuern mindestens eines Aktors (14) des Systems (10) abhängig von dem Tiefeninformationsbild.

**11.** Computerprogramm, welches Befehle umfasst, die eingerichtet sind, wenn diese Befehle auf einem Computer ausgeführt werden, den Computer zu veranlassen, das Verfahren nach einem der Ansprüche 1 bis 8 auszuführen.

**12.** Elektronisches Speichermedium, auf welchem ein Computerprogramm nach Anspruch 11 gespeichert ist.

## Claims

1. Computer-implemented method for determining a depth information image for an input image (B), in order in particular to drive vehicle functions depending on the depth information image, wherein the input image (B) is processed by way of a convolutional neural network (2), wherein the convolutional neural network (2) has multiple layers that process the input image (B) sequentially and each convert an input feature map (MKI) into an output feature map (MKO), wherein at least one of the layers is formed as a depth map layer, wherein the depth information image is determined depending on a depth map layer, wherein, in the depth map layer (22),

   - an input feature map (MKI) of the depth map layer (22) is convolved with multiple scaling filters (23, 23a, 23b, 23c) in order to obtain respective scaling maps (24a, 24b, 24c), wherein the scaling filters were generated, depending on a predefined filter, by predefined scalings of this predefined filter;
   - the multiple scaling maps (24a, 24b, 24c) are compared pixel-by-pixel in order to generate a respective output feature map (MKO) in which each pixel corresponds to a corresponding pixel from a selected one of the scaling maps (24a, 24b, 24c),
   - a scaling feature map (SK) is generated by assigning each pixel of the scaling feature map (SK) to an indication indicating the scaling map (24a, 24b, 24c) from which the pixel of the output feature map (MKO) is selected;

   wherein the depth information image corresponds to the scaling feature map (SK) or is determined depending on the scaling feature map (SK).

2. Method according to Claim 1, wherein the selected scaling map (24a, 24b, 24c) corresponds to the scaling map that contains the greatest pixel value for the respective pixel.

3. Method according to Claim 2, wherein the scaling filters are determined from a filter kernel of the trained convolutional neural network by downsampling or upsampling.

4. Method according to one of Claims 1 to 3, wherein multiple scaling feature maps (SK) are determined in multiple depth map layers (22), wherein the depth information image is determined from the multiple scaling feature maps (SK) by way of a further neural network (3), wherein the depth information image in particular corresponds to a depth map (TK).

5. Method according to Claim 3, wherein the depth information image is determined from the multiple scaling feature maps (SK) and one or more output feature maps (MKO) of one or more of the layers of the neural network (2) and/or an output image (A) of the neural network (2).

6. Method according to one of Claims 1 to 5, wherein the neural network generates an output image (A), wherein at least one of the layers (21) generates an output feature map (MKO) and/or the output image (A) depending on one or more of the scaling feature maps (SK), wherein in particular the one or more input feature maps (MKI) supplied to the scaling feature maps (SK) of the layer in question are added thereto.

7. Method according to Claim 6, wherein, in a downstream additional neural network, the output image (A) and the depth information image are processed together, wherein the additional neural network processes the output image (A) and the depth information image to form a segmented image.

8. Method according to one of Claims 1 to 7, wherein the depth information image is used to drive a vehicle function, in particular a fully autonomous or semi-autonomous driving mode or a driver assistance function for warning about objects in the environment.

9. Device for determining a depth information image for an input image (B), in order in particular to drive vehicle functions depending on the depth information image, wherein the input image (B) is processed by way of a convolutional neural network (2), wherein the convolutional neural network (2) has multiple layers that process the input image (B) sequentially and each convert an input feature map (MKI) into an output feature map (MKO), wherein at least one of the layers is formed as a depth map layer (22), wherein the depth information image is determined depending on a depth map layer (22), wherein the device is designed, for the at least one depth map layer (22):

   - to convolve an input feature map (MKI) of the depth map layer (22) in question with multiple scaling filters in order to obtain respective scaling maps (24a, 24b, 24c), wherein the scaling filters were generated, depending on a predefined filter, by predefined scalings of this predefined filter,
- to compare the multiple scaling maps (24a, 24b, 24c) pixel-by-pixel in order to generate a respective output feature map (MKO) in which each pixel corresponds to a corresponding pixel from a selected one of the scaling maps (24a, 24b, 24c),
- to generate a scaling feature map (SK) by assigning each pixel of the scaling feature map (SK) to an indication indicating the scaling map (24a, 24b, 24c) from which the pixel of the output feature map (MKO) is selected;

wherein the depth information image corresponds to the scaling feature map (SK) or is determined depending on the scaling feature map (SK).

**10.** System (10) comprising:

- an image acquisition apparatus (11) for acquiring an input image (B);
- a preprocessing apparatus (12) corresponding to the device according to Claim 9 for providing a depth information image depending on the input image;
- a control unit (13) for driving at least one actuator (14) of the system (10) depending on the depth information image.

**11.** Computer program comprising instructions that, when these instructions are executed on a computer, are configured to cause the computer to carry out the method according to one of Claims 1 to 8.

**12.** Electronic storage medium on which a computer program according to Claim 11 is stored.

## Revendications

**1.** Procédé mis en œuvre par ordinateur pour la détermination d'une image d'information de profondeur pour une image d'entrée (B), afin de commander des fonctions de véhicule en particulier en fonction de l'image d'information de profondeur, l'image d'entrée (B) étant traitée à l'aide d'un réseau neuronal convolutif (2), le réseau neuronal convolutif (2) comportant de multiples couches qui traitent séquentiellement l'image d'entrée (B) et convertissent chacune une carte de caractéristiques d'entrée (MKI) en une carte de caractéristiques de sortie (MKO), au moins l'une des couches étant formée en tant que couche de carte de profondeurs, l'image d'information de profondeur étant déterminée en fonction d'une couche de carte de profondeurs, dans lequel, dans la couche de carte de profondeurs (22)

- une carte de caractéristiques d'entrée (MKI) de la couche de carte de profondeurs (22) est pliée avec de multiples filtres d'échelle (23, 23a, 23b, 23c) pour obtenir des cartes d'échelle (24a, 24b, 24c) respectives, les filtres d'échelle ayant été générés en fonction d'un filtre prédéterminé par des changements d'échelle prédéterminées de ce filtre prédéterminé ;
- les multiples cartes d'échelle (24a, 24b, 24c) sont comparées pixel par pixel pour générer une carte de caractéristiques de sortie (MKO) respective dans laquelle chaque pixel correspond à un pixel correspondant d'une carte sélectionnée parmi les cartes d'échelle (24a, 24b, 24c),
- une carte de caractéristiques d'échelle (SK) est générée en faisant en sorte que chaque pixel de la carte de caractéristiques d'échelle (SK) soit associé à une indication qui indique la carte d'échelle (24a, 24b, 24c) à partir de laquelle le pixel de la carte de caractéristiques de sortie (MKO) est sélectionné ;

dans lequel l'image d'information de profondeur correspond à la carte de caractéristiques d'échelle (SK) ou est déterminée en fonction de la carte de caractéristiques d'échelle (SK).

**2.** Procédé selon la revendication 1, dans lequel la carte de caractéristiques d'échelle (24a, 24b, 24c) sélectionnée correspond à la carte de caractéristiques d'échelle qui contient la plus grande valeur de pixel pour le pixel respectif.

**3.** Procédé selon la revendication 2, dans lequel les filtres d'échelle sont déterminés à partir d'un noyau de filtre du réseau neuronal convolutif entraîné par sous-échantillonnage ou sur-échantillonnage.

**4.** Procédé selon l'une des revendications 1 à 3, dans lequel de multiples cartes de caractéristiques d'échelle (SK) sont déterminées dans de multiples couches de cartes de profondeurs (22), l'image d'information de profondeur étant déterminée à partir des multiples cartes de caractéristiques d'échelle (SK) à l'aide d'un autre réseau neuronal (3), l'image d'information de profondeur correspondant en particulier à une carte de profondeurs (TK) .

**5.** Procédé selon la revendication 3, dans lequel l'image d'information de profondeur est déterminée à partir des multiples cartes de caractéristiques d'échelle (SK) et d'une ou de multiples cartes de caractéristiques de sortie (MKO) d'une ou de multiples couches parmi les couches du réseau neuronal (2) et/ou d'une image de sortie (A) du réseau neuronal (2).

**6.** Procédé selon l'une des revendications 1 à 5, dans lequel le réseau neuronal génère une image de sortie (A), au moins l'une des couches (21) générant une carte de caractéristiques de sortie (MKO) et/ou l'image de sortie (A) en fonction d'une ou de multiples cartes parmi les cartes de caractéristiques d'entrée (SK), en particulier ladite une ou lesdites multiples cartes de caractéristiques d'entrée (MKI) ajoutées aux cartes de caractéristiques d'entrée (SK) de la couche concernée étant ajoutées à celle-ci.

**7.** Procédé selon la revendication 6, dans lequel l'image de sortie (A) et l'image d'information de profondeur sont traitées conjointement dans un réseau neuronal supplémentaire connecté en aval, le réseau neuronal supplémentaire traitant l'image de sortie (A) et l'image d'information de profondeur pour obtenir une image segmentée.

**8.** Procédé selon l'une des revendications 1 à 7, dans lequel l'image d'information de profondeur est utilisée pour commander une fonction de véhicule, qui concerne notamment un mode de conduite entièrement autonome ou semi-autonome ou une fonction d'assistance à la conduite permettant d'être averti de la présence d'objets environnants.

**9.** Dispositif de détermination d'une image d'information de profondeur pour une image d'entrée (B), afin de commander des fonctions de véhicule en particulier en fonction de l'image d'information de profondeur, l'image d'entrée (B) étant traitée à l'aide d'un réseau neuronal convolutif (2), le réseau neuronal convolutif (2) comportant de multiples couches qui traitent séquentiellement l'image d'entrée (B) et convertissent chacune une carte de caractéristiques d'entrée (MKI) en une carte de caractéristiques de sortie (MKO), au moins l'une des couches étant formée en tant que couche de carte de profondeurs (22), l'image d'information de profondeur étant déterminée en fonction d'une couche de carte de profondeurs (22), le dispositif étant conçu, pour ladite au moins une couche de carte de profondeurs (22), afin de :

- plier une carte de caractéristiques d'entrée (MKI) de la couche de carte de profondeurs (22) avec de multiples filtres d'échelle pour obtenir des cartes d'échelle (24a, 24b, 24c) respectives, les filtres d'échelle ayant été générés en fonction d'un filtre prédéterminé par des changements d'échelle prédéterminées de ce filtre prédéterminé,
- comparer les multiples cartes d'échelle (24a, 24b, 24c) pixel par pixel pour générer une carte de caractéristiques de sortie (MKO) respective dans laquelle chaque pixel correspond à un pixel correspondant d'une carte sélectionnée parmi les cartes d'échelle (24a, 24b, 24c),
- générer une carte de caractéristiques d'échelle (SK) en faisant en sorte que chaque pixel de la carte de caractéristiques d'échelle (SK) soit associé à une indication qui indique la carte d'échelle (24a, 24b, 24c) à partir de laquelle le pixel de la carte de caractéristiques initiale (MKO) est sélectionné ;

dans lequel l'image d'information de profondeur correspond à la carte de caractéristiques d'échelle (SK) ou est déterminée en fonction de la carte de caractéristiques d'échelle (SK).

**10.** Système (10) comprenant :

- un dispositif d'acquisition d'image (11) destiné à acquérir une image d'entrée (B)
- un dispositif de prétraitement (12) correspondant au dispositif selon la revendication 9 destiné à fournir une image d'information de profondeur en fonction de l'image d'entrée ;
- un appareil de commande (13) destiné à commander au moins un actionneur (14) du système (10) en fonction de l'image d'information de profondeur.

**11.** Programme informatique, lequel comporte des instructions qui, lorsque ces instructions sont exécutées sur un ordinateur, sont conçues pour amener l'ordinateur à mettre en œuvre le procédé selon l'une des revendications 1 à 8.

**12.** Support de stockage électronique sur lequel est stocké un programme informatique selon la revendication 11.

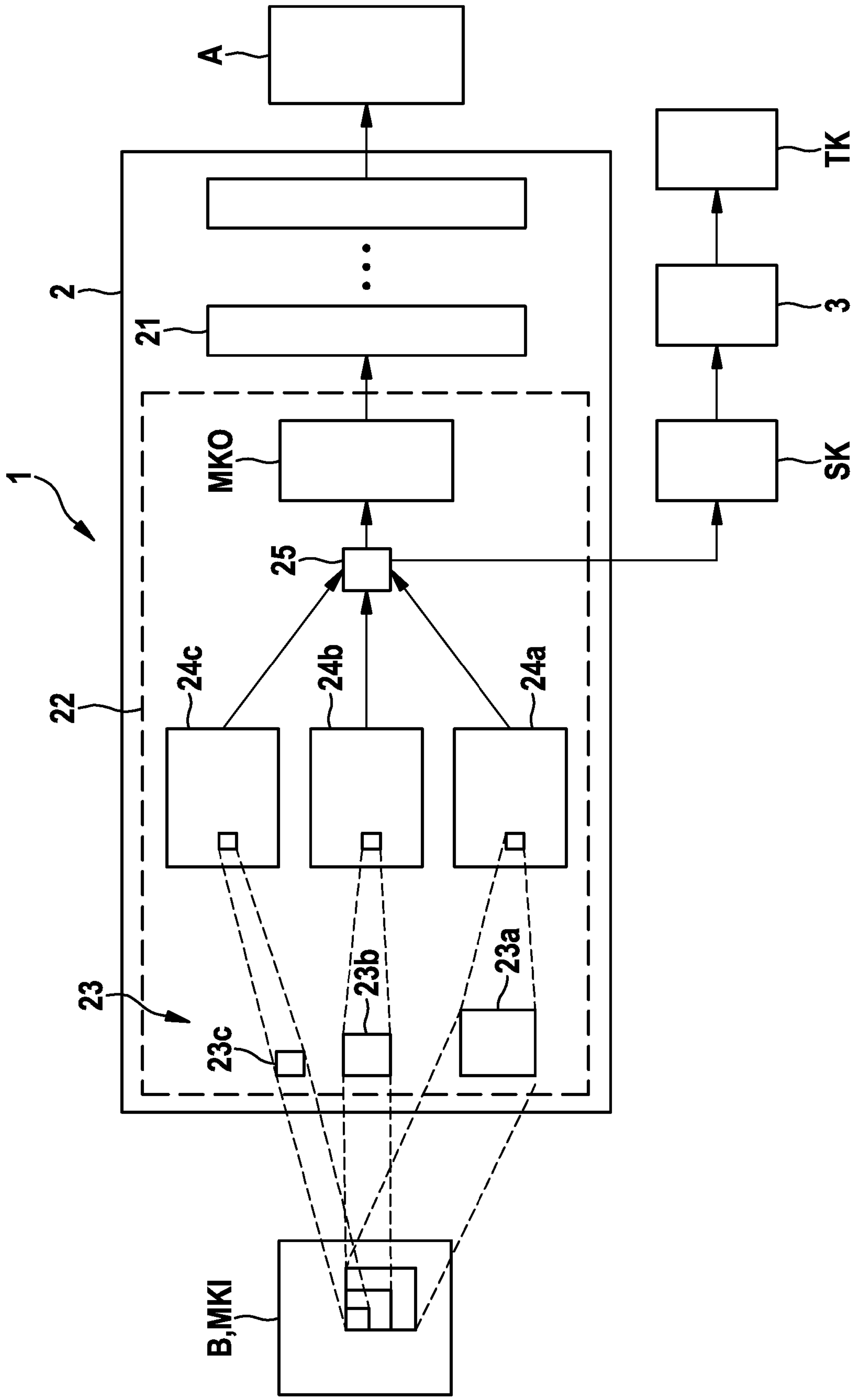


Fig. 1

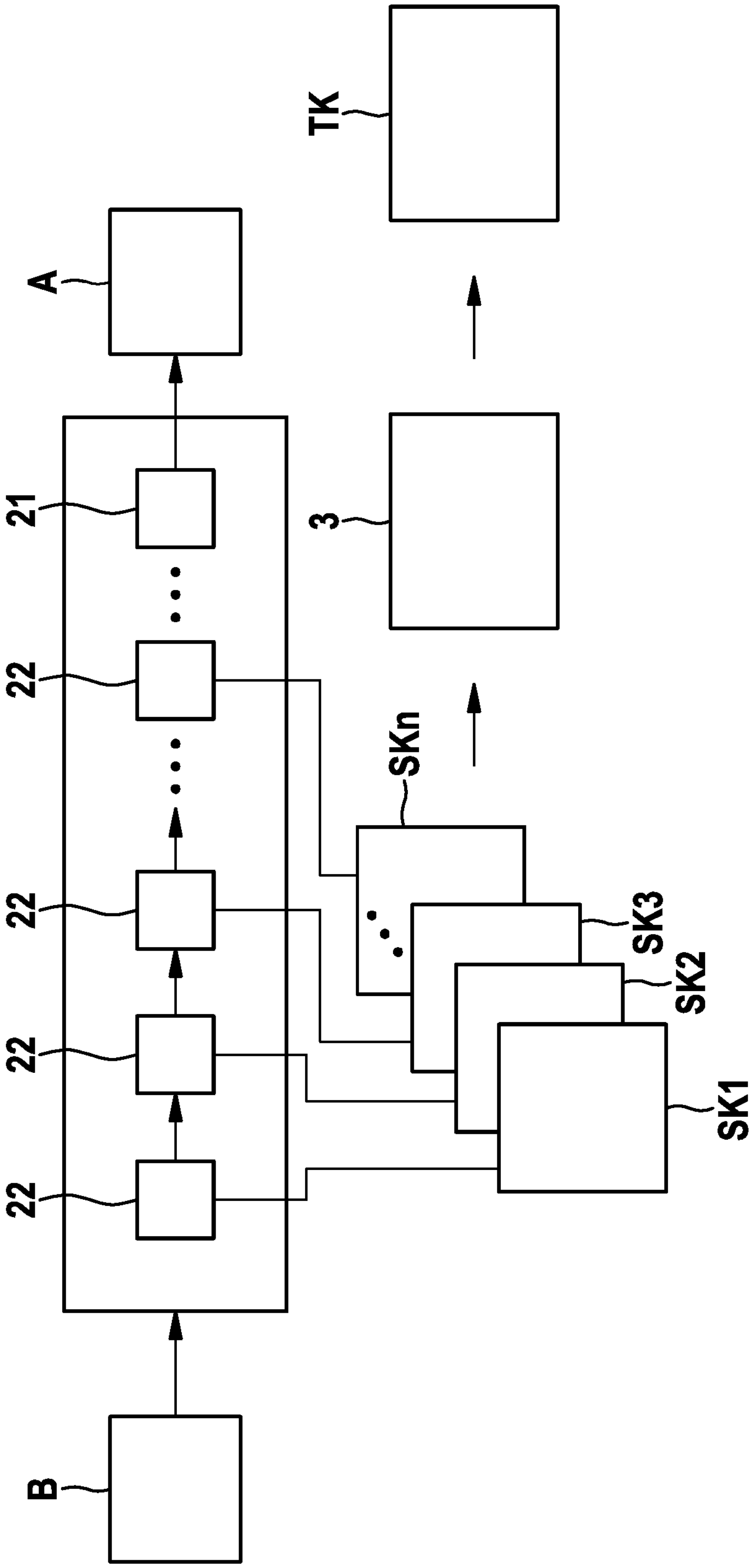


Fig. 2

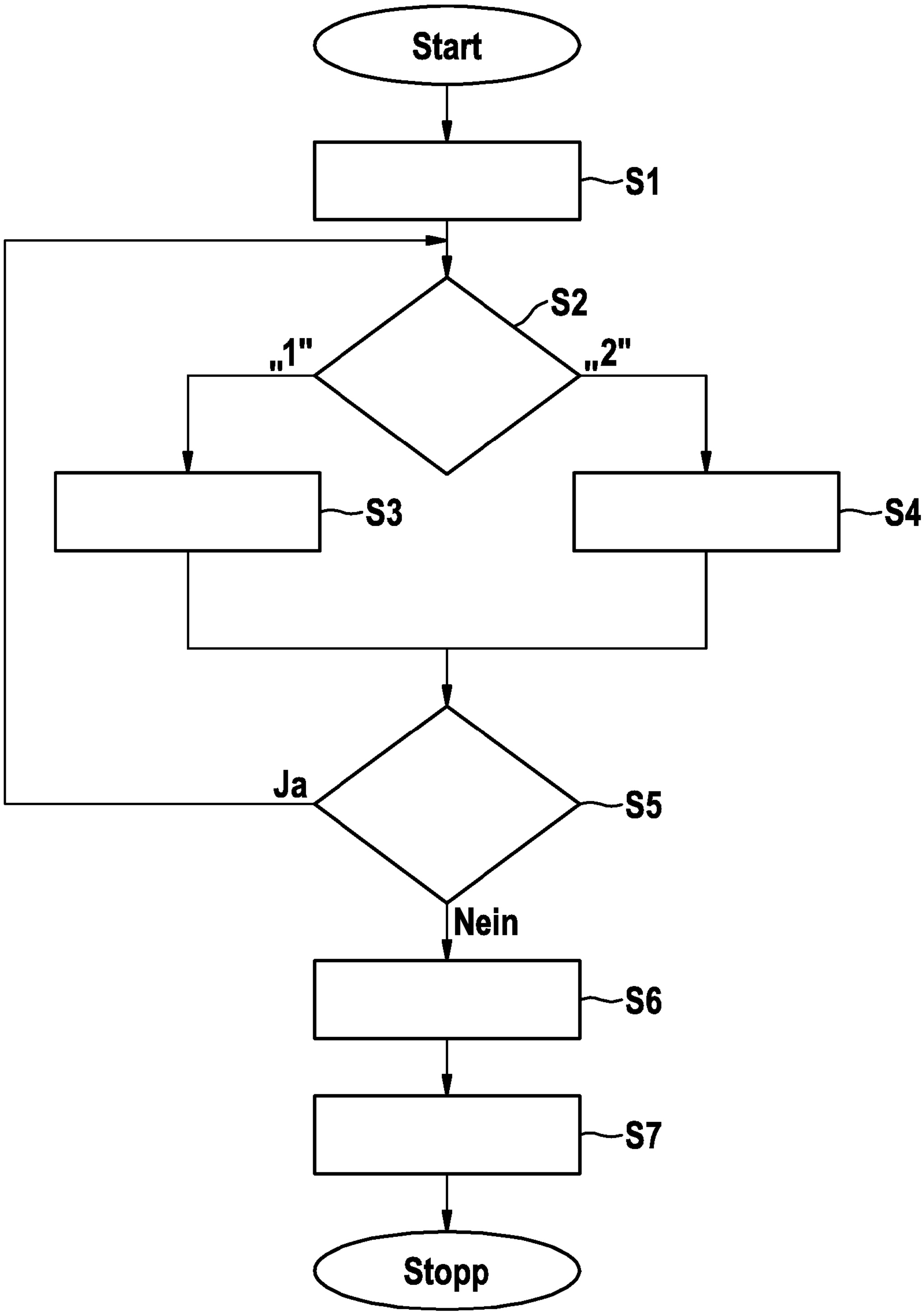


Fig. 3

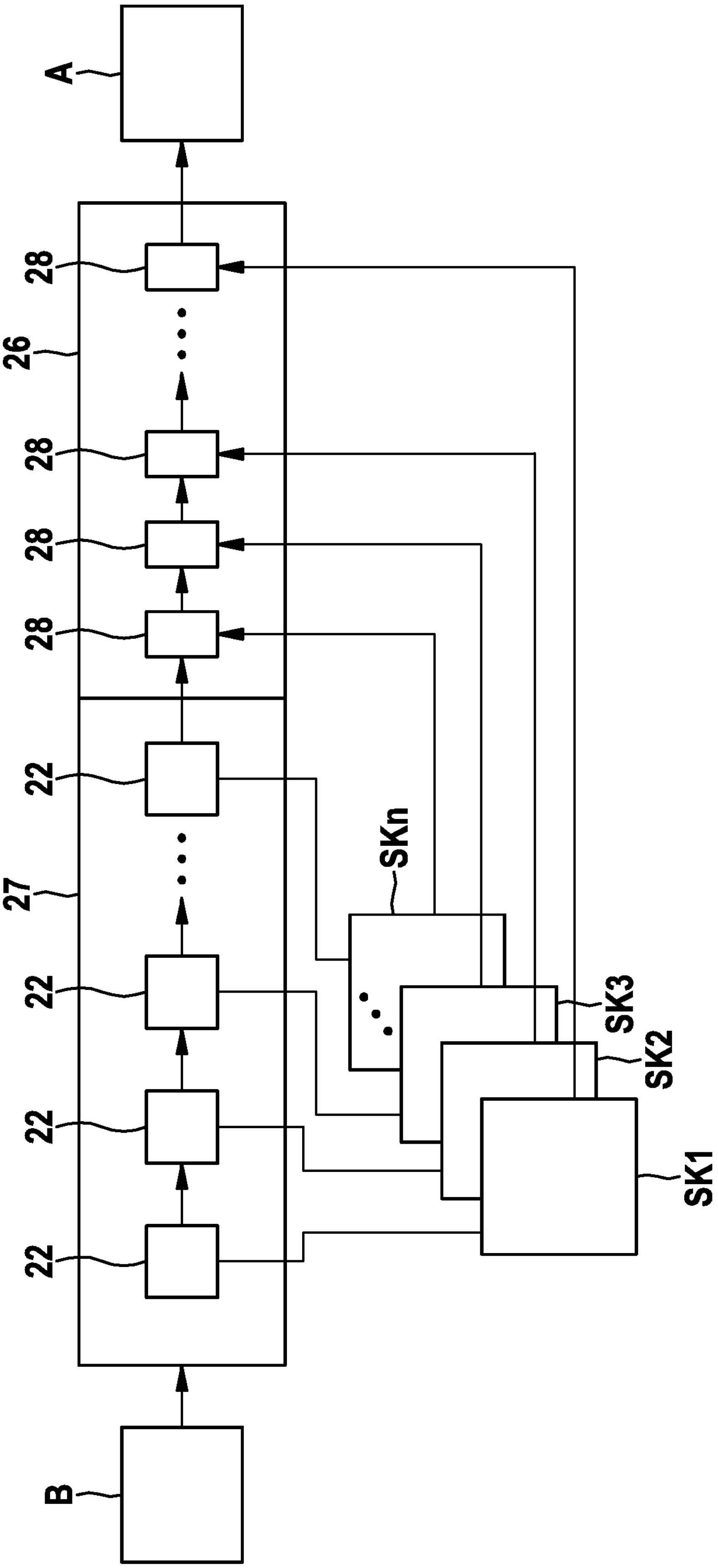


Fig. 4

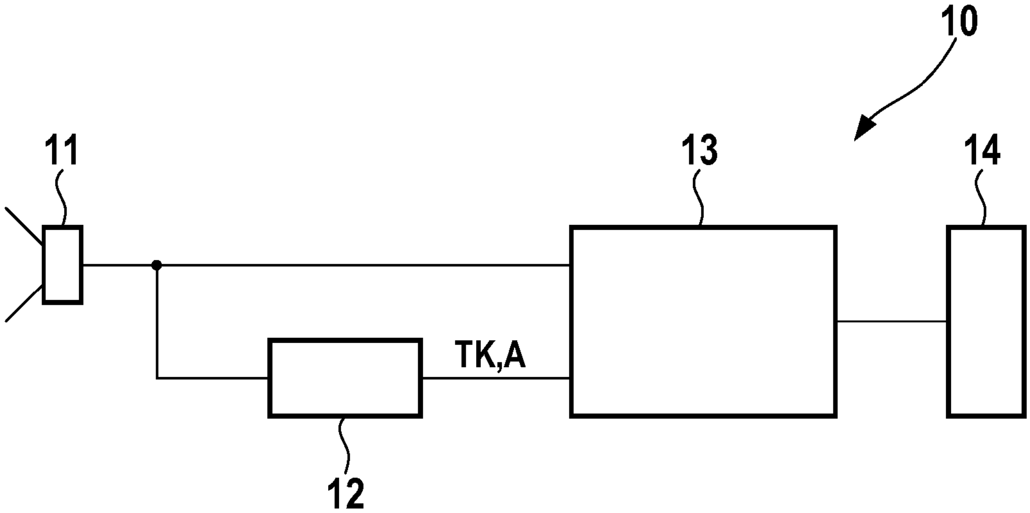


Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **DAVID EIGEN et al.** *Depth Map Prediction from a Single Image using a Multi-Scale Deep Network,* 09. Juni 2014
- **HYEONWOO NOH et al.** Learning Deconvolution Network for Semantic Segmentation. *Computer Vision and Pattern Recognition, https://arxiv.org/abs/1505.04366*